(19) **Europäisches Patentamt / European Patent Office / Office européen des brevets**

(11) **EP 0 811 044 B2**

(12) **NOUVEAU FASCICULE DE BREVET EUROPEEN**

(45) Date de publication et mention de la décision concernant l'opposition:
**21.03.2007 Bulletin 2007/12**

(45) Mention de la délivrance du brevet:
**20.09.2000 Bulletin 2000/38**

(21) Numéro de dépôt: **96904902.2**

(22) Date de dépôt: **23.02.1996**

(51) Int Cl.:
*C09J 103/02* *(2006.01)*    *C07F 5/04* *(2006.01)*

(86) Numéro de dépôt international:
**PCT/FR1996/000292**

(87) Numéro de publication internationale:
**WO 1996/026252 (29.08.1996 Gazette 1996/39)**

(54) **SOLUTION AQUEUSE BOREE NOTAMMENT POUR L'ADJUVANTATION DE COLLE AMYLACEE**

BORIERTE, WÄSSRIGE LÖSUNG INSBESONDERE ALS ZUSATZ ZUM STÄRKEKLEBSTOFF

BORON-CONTAINING AQUEOUS SOLUTION PARTICULARLY FOR ADDITION TO AMYLOID GLUE

(84) Etats contractants désignés:
**AT BE CH DE DK ES FR GB GR IE IT LI LU MC NL PT SE**

(30) Priorité: **24.02.1995 FR 9502391**

(43) Date de publication de la demande:
**10.12.1997 Bulletin 1997/50**

(73) Titulaire: **CHIMIQUEMENT VOTRE 26400 MIRABEL ET BLACONS (FR)**

(72) Inventeurs:
• **DUCLAUD, Didier, Marcel**
  **F-26400 Mirabel-et-Blacons (FR)**
• **DE PANNEMACKER, René**
  **F-26730 Hostun (FR)**
• **LAGO, Jean-Christophe**
  **F-26400 Crest (FR)**

(74) Mandataire: **Guerre, Dominique et al Cabinet Germain & Maureau, 12 rue Boileau 69006 Lyon (FR)**

(56) Documents cités:
| | |
|---|---|
| **EP-A- 0 326 247** | **BE-A- 842 649** |
| **DE-A- 2 140 051** | **DE-A- 2 401 554** |
| **GB-A- 2 016 446** | **US-A- 2 408 332** |
| **US-A- 3 228 781** | **US-A- 4 033 914** |
| **US-A- 4 332 609** | **US-B- 6 176 917** |

Remarques:
Le dossier contient des informations techniques présentées postérieurement au dépôt de la demande et ne figurant pas dans le présent fascicule.

EP 0 811 044 B2

**Description**

**DOMAINE TECHNIQUE:**

Le domaine technique de la présente invention est celui de la solubilisation de composés borés, notamment et non limitativement en vue de l'adjuvantation de colles amylacées à l'aide de compositions borées.

Plus précisément, l'invention concerne l'incorporation d'acide borique et/ou de borates tels que le borax, dans des compositions aqueuses, par exemple les compositions amylacées du type de celles employées pour la fabrication de colles amylacées. Ces dernières sont utiles, notamment, dans l'industrie du papier/carton et plus particulièrement pour la manufacture de cartons et d'emballages en carton.

Plus précisément encore, l'invention a pour objet une solution aqueuse borée et son utilisation e.g. pour l'adjuvantation de colles amylacées, ladite solution étant du type de celles comportant au moins un composé aminé, de préférence aminohydroxylé, ou alkylamine, et/ou un composé polyhydroxylé.

**ART ANTERIEUR:**

Les produits borés ou boraciques sont des dérivés de l'élément chimique bore (B) et on s'en referera à cette acception dans le présent exposé. Ainsi, au sens de la présente invention, ces dérivés sont notamment l'acide borique et les borates, comme par exemple le borax pentahydrate, le borax décahydraté, le pentaborate de sodium tétrahydrate, le métaborate de sodium octahydrate, le tétraborate de potassium tétrahydrate, le pentaborate de potassium octahydrate. Ces produits borés commerciaux sont largement utilisés comme ingrédients plus ou moins actifs dans des compositions de toutes natures, telles que des fertilisants, des détergents, des liquides de coupe métallurgiques, des médicaments, des produits cosmétiques, ou bien encore des produits à base d'amidon tel que les adhésifs pour papier/carton.

Si l'on prend l'exemple des colles amylacées, il faut savoir qu'elles contiennent de l'amidon natif et/ou de l'amidon modifié tel que les amidons réticulés. Pour qu'ils puissent développer leur pouvoir de véhicule, il est nécessaire de les chauffer en présence de soude, de manière à provoquer l'éclatement de tous les grains d'amidon. Cela forme un empois dans lequel l'amidon secondaire est ajouté. Ce dernier définit le pouvoir adhésif de la colle, car la conjugaison de la température, générée par les cylindres cannelés et l'application de la colle sur le carton, permet de former un complexe lié par le fait que l'amidon secondaire a éclaté. L'une des difficultés rencontrées par les applicateurs lors de la formation de la colle tient à la maîtrise de la viscosité. Cette dernière doit être fixée avec soin de façon à permettre une enduction aisée sur les supports à coller. Il est ainsi connu d'utiliser à cette fin des adjuvants borés, ayant des effets plastifiant, renforçant, filant et promoteur d'adhésion (entre autres) vis-à-vis de la colle amylacée.

Classiquement le produit boré ajouté est constitué par du borax poudre, qui est incorporé en continu ou semi-continu dans la colle amylacée en formation. Cette forme borée pulvérulente est génératrice de plusieurs inconvénients. En premier lieu, la poudre de borax pose des problèmes de stockage puisqu'elle a une tendance à la reprise en eau, d'où des phénomènes de mottage. Or, il est clair qu'un produit motté se manipule difficilement, notamment parce qu'il ne s'écoule plus. En second lieu la poudre de borax (éventuellement mottée) est susceptible d'entraîner des imprécisions de dosage, en raison des incidents de blocage ou de bourrage pouvant se produire dans les moyens d'alimentation en poudre (trémie, vis sans fin) classiquement employés dans les procédés de fabrication de colle en continu. En troisième lieu, le borax poudre se mélange mal avec la colle amylacée en formation, ce qui nécessite des moyens d'agitation sophistiqués et nécessite de plus longues durées de réaction ou d'incorporation.

Pour tenter de surmonter ces difficultés, il a été proposé d'ajouter l'acide borique ou le borax hydraté sous forme de solution, tant il est clair que la manipulation d'un liquide et le mélange intime d'un liquide à un liquide sont plus simples que celle d'un solide.

C'est ainsi que la demande de brevet européen N° **326 247** décrit un procédé d'addition d'acide borique ou de borate dans une colle amylacée en préparation. La composition liquide borée mise en oeuvre dans l'invention selon cette demande antérieure, comprend 25 à 35 % en poids d'acide borique ou de borate, 55 à 35 % en poids d'eau et 20 à 30 % en poids de monoéthanolamine ou d'un composé organique polyhydroxylé. De telles compositions sont relativement pauvres en principe boré actif. Il s'ensuit que les concentrations théoriques, en anhydride borique $B_2O_3$ correspondantes sont encore plus faibles. Ce ne sont pas là des conditions optimales d'efficacité du produit boré en tant qu'adjuvant de colle amylacée. En outre, cela est révélateur d'une certaine incapacité de l'invention selon cette demande EP N° **326 247**, d'améliorer la solubilité dans l'eau de produits borés, laquelle solubilité étant connue pour être très faible. Par ailleurs, dans ce procédé de l'art antérieur, on prend soin d'effectuer la préparation de la composition liquide borée, à des températures de dissolution inférieures à 70 °C. Le but ainsi recherché est d'éviter la formation d'un complexe soluble entre le produit boré et les ingrédients du type monoéthanolamine ou composés polyhydroxyliques. Derrière cette disposition technique, on décèle la crainte d'une perturbation organique, voire d'un amoindrissement de l'efficacité du produit boré, dans le cas où il formerait un complexe. En définitive, cette composition liquide borée connue, est peu performante et par conséquent peu rentable sur le plan économique.

Le brevet américain US N˚**4 332 609** décrit un fertilisant boré comprenant un composé d'acide borique avec une alcanolamine. Ce document n'a rien à voir, entre autres, avec l'utilisation de liquide boré dans l'adjuvantation de colle amylacée.

Force est donc de constater que l'art antérieur est imparfait voire défaillant, en ce qui concerne la fourniture d'un substitut boré liquide au borax poudre traditionnel, notamment dans le cadre de l'adjuvantation de compositions diverses, par exemple, des colles amylacées, des compositions décontaminantes pour produits radioactifs, des compositions biocides ou des compositions lustrantes et cirantes, entre autres.

Dans cet état de faits, l'un des objectifs essentiel de l'invention est de fournir un adjuvant boré, notamment, pour colle amylacée, adjuvant qui se présente sous forme liquide stable et qui soit doté d'une grande efficacité par unité de masse, au regard notamment des fonctions de promoteur d'adhérence, de plastifiant, et de renforçateur de cohésion, de l'adhésif amylacé.

Un autre objectif de l'invention est de fournir un adjuvant liquide boré notamment pour colles amylacées, pour compositions décontaminantes de produits radioactifs, pour compositions biocides, ou pour compositions lustrantes et cirantes qui soit facile à préparer et à manipuler.

Un autre objectif essentiel de l'invention est de fournir un adjuvant liquide boré notamment pour colles amylacées, pour compositions décontaminantes de produits radioactifs, pour compositions biocides, ou pour compositions lustrantes et cirantes qui soit économique, par le fait de l'utilisation d'un mono-produit pour plusieurs actions.

Un autre objectif essentiel de l'invention est de fournir un adjuvant liquide boré de remplacement, notamment, pour colles amylacées, pour compositions décontaminantes de produits radioactifs, pour compositions biocides, ou pour compositions lustrantes et cirantes, adjuvant se présentant sous forme de solution.

Un autre objectif essentiel de l'invention est de fournir un adjuvant liquide boré notamment, pour colles amylacées, pour compositions décontaminantes de produits radioactifs, pour compositions biocides, ou pour compositions lustrantes et cirantes, possédant au moins l'une des propriétés suivantes : bactéricide, fongicide anti-mousse (entre autres).

Un autre objectif de l'invention est de fournir un procédé de préparation simple et peu onéreux de l'adjuvant susvisé.

## BREVE DESCRIPTION DE L'INVENTION :

Ces objectifs, parmi d'autres, sont atteints par la présente invention qui concerne l'utilisation d'une solution aqueuse borée selon la revendication 1.

Avantageusement, cette solution peut comprendre au moins un agent augmentant la mouillabilité de la solution sélectionné de préférence parmi les composés suivants : méthanol ou 2-éthyl-hexylsulfate et leurs mélanges.

La présente invention concerne également l'utilisation d'une solution aqueuse borée telle que définie supra,

- ♦ caractérisée en ce que la solution aqueuse borée comporte :

  - ∗ une quantité théorique de $B_2O_3$, comprise entre 25 et 55, de préférence entre 25 et 45 et plus préférentiellement encore entre 32 et 38 % en poids
  - ∗ au moins un complexe solubilisé entre au moins un produit boré et le composé aminé, de préférence aminohydroxylé et/ou alkylaminé et/ou arylamine, et/ou un composé polyhydroxylé organique,
  - ∗ et, éventuellement, au moins un biocide et/ou un anti-mousse et/ou un tensio-actif anionique ou non ionique,

- ♦ en ce qu'elle est obtenue à partir d'au moins un soluté boré initial formé par un mélange :

  - . d'au moins un borate,
  - . d'acide borique et/ou de $B_2O_3$,
  - . et éventuellement d'au moins une base forte,

- ♦ et en ce que son pH est compris entre 6 et 9, de préférence entre 7 et 8.

## EXPOSE DETAILLE DE L'INVENTION :

Il est du mérite de la Demanderesse d'avoir mis en évidence l'importance de la quantité théorique d'anhydride borique $B_2O_3$ dans la composition liquide borée considérée. Il a pu ainsi être démontré qu'il est important de ne pas descendre en dessous d'une concentration théorique plancher en $B_2O_3$, afin d'obtenir un optimum sur le plan du compromis d'efficacité / solubilité dans l'eau pour le produit boré et d'autre part, que la présence d'un complexe solubilisé *produit boré / composé aminé et/ou polyhydroxylé organique* s'impose également. Le choix de la plage de pH est également important. Il détermine une bonne solubilisation des constituants de la composition liquide borée.

De manière surprenante et sans vouloir être lié par la théorie, la demanderesse a montré que la solubilisation du produit ou (soluté) boré passe, d'une part, par sa transformation (initialisation) en un complexe avec un composé aminohydroxylé et/ou avec un composé aminoalkylé et/ou avec un composé polyhydroxylé organique et, d'autre part, par sa transformation en un borate très soluble dans l'eau, e.g. le pentaborate par exemple de sodium.

Connaissant l'équation de complexation et la solubilité de ce borate particulièrement soluble, en l'occurrence soluble à raison de 15,2 % poids pour le pentaborate de sodium, l'homme du métier peut déterminer des solutés de départ, les quantités stoechiométriques adaptées pour obtenir une complexation et, au besoin, une transformation optima en borate soluble.

Selon une variante, la solution aqueuse borée peut être exempte de produits aminés et/ou de composés polyhydroxylés et peut comporter un ou plusieurs additifs, du type biocide (fongicide / bactéricide) anti-mousse, tensioactif, etc.

La mise en oeuvre d'un adjuvant boré liquide formé par une solution aqueuse selon l'invention, peut parfaitement s'inscrire dans un mode continu ou semi continu de préparation, par exemple, de colle amylacée. Classiquement, une telle préparation précède immédiatement l'enduction de l'adhésif amylacé sur les supports à coller (papier, carton). L'incorporation de la solution selon l'invention s'opère aisément et une fois introduite, ladite solution se mélange intimement avec l'empois d'amidon additionné de soude. Cette étape est brève de sorte que la colle amylacée est rapidement dotée des propriétés que lui confère la solution borée : adhésivité, viscosité (texture filante) adaptée, renforcement de la cohésion.

Il convient d'observer que la solution selon l'invention constitue un produit de substitution à poids égal de borax poudre.

Il est, également, important de souligner que la solution aqueuse borée selon l'invention est stable au stockage (plusieurs mois à des températures allant de - 5 ˚C à supérieures à 60 ˚C) et idéalement ne présente pas de produits non dissous, cristallisés.

Outre la diminution du temps d'homogénéisation avec les composants de la colle amylacée en formation, la solution aqueuse borée selon l'invention augmente la température d'éclatement de la colle amylacée (température de gélatinisation). Il est clair que cela permet d'ouvrir la porte à l'utilisation d'amidon ayant à l'origine une faible température d'éclatement.

L'incorporation de la solution selon l'invention est accompagnée d'une agitation.

Il va de soi que l'invention n'est pas limitée à l'application colle amylacée susvisée.

Selon une disposition préférée de l'invention, le composé aminohydroxylé est choisi parmi les produits suivants : monoéthanolamine, diéthanolamine, triéthanolamine et leurs mélanges (entre autres),

le composé aminé est choisi parmi les produits suivants : hydrazine, diéthylènetriamine, éthylènediamine et, entre autres, leurs mélanges et le composé polyhydroxylé organique est choisi parmi les produits suivants : glycérine, glucose, sorbitol, entre autres, et leurs mélanges.

Le composé aminohydroxylé est susceptible d'avoir un effet d'abaissement du pH de la solution dont il faut tenir compte à propos de la régulation du pH.

Il pourrait être utile, dans certains cas, d'avoir recours à au moins une base forte minérale ou organique, pour ajuster le pH entre 7 et 8, dans la solution aqueuse borée considérée. Cette base est de préférence de nature hydroxylique, mais plus préférentiellement encore est choisie parmi les produits suivants : NaOH, KOH, LiOH, entre autres, et leurs mélanges. Cette base est au moins initialement (à la préparation) comprise dans la solution. Il est clair qu'ensuite, au moins une partie de cette base réagit avec les autres solutés de la solution.

Selon une disposition avantageuse de l'invention, le produit boré est sélectionné dans la liste suivante : anhydrides boriques, acides boriques, borates et leurs mélanges,

les composés préférés étant les suivants : $B_4O_7 Na_2$, 10 $H_2O$ (Borax) ; $B_4O_7Na_2$, $5H_2O$ (Borax pentahydraté) ; $B_4O_7Na_2$ (Borax anhydre) ; $B(OH)_3$ (acide borique), $B_2O_3$ (anhydride borique) ; $B_{10}O_{18}N0a_2$, $10H_2O$ (pentaborate de sodium) ; $BO_2 Na$, $4H_2O$ (métaborate de sodium) ; $B_{10} O_{18}K_2$, 8 $H_2O$ (pentaborate de potassium) ; $B_4O_7K_2$, 4 $H_2O$ (tétraborate de potassium) ; $B_4O_7(NH_4^+)_2$, 4 $H_2O$ (pentaborate d'ammonium) entre autres et leurs mélanges ;

l'association d'acide borique avec de la soude pour l'initialisation du pentaborate de sodium étant particulièrement préférée.

Un autre paramètre caractéristique mais non limitatif de la solution selon l'invention est sa densité à 20 C, qui est de 1,4 $\pm$ 0,4 de préférence.

Selon un autre de ces aspects, l'invention concerne une solution aqueuse borée, susceptible d'être mise en oeuvre dans l'utilisation décrite supra et caractérisée en ce que le produit boré est constitué par un mélange d'au moins un borate et d'acide borique et/ou de $B_2O_3$. Les borates sont par exemple ceux décrits ci-dessus.

Conformément à une variante avantageuse mise en oeuvre de l'invention, la solution comporte, notamment, au moins un additif choisi parmi :

les anti-mousses, les biocides, les agents augmentant la résistance à l'humidité, les colorants, les tensioactifs ioniques ou non et leurs mélanges.

Le biocide est, de préférence, sélectionné parmi les ammoniums quaternaires et/ou les dérivés d'isothiazolinone. Comme autres exemples de biocides, en particulier bactéricides et/ou fongicides, on peut citer le formol, le glutaraldéhyde et les aldéhydes.

Outre les anti-mousses, la solution peut également comprendre d'autres tensioactifs tels que des acides gras éthoxylés, des blocs copolymères avec un hydrotope de type cumène, xylène sulfonate, ou des tensioactifs ioniques ou non, de type 2-éthylhexylsulfate ou alcool gras éthoxylé.

La solution peut également contenir d'autres ingrédients du type résine céto-aldéhyde, colorant, parfum, solvant de type méthanol.

En pratique, la solution aqueuse borée mise en oeuvre notamment dans le cadre de l'utilisation selon l'invention, peut répondre à la composition suivante :

- acide borique (à 56,3 % poids de $B_2O_3$ et 43,7 % poids d'eau)     0 - 80 % poids.
- pentaborate de sodium     0 - 35 % poids.
- borate(s) alcalin(s)     0 - 20% poids.
- $B_2O_3$     0 - 50% poids.
- NaOH (30 % poids)     0 - 50 % poids.
- hydroxylamine, amine, hydrazine     0 - 40 % poids.
- Antimousse et/ou biocide et/ou tensioactif (entre autres)     0 - 20 % poids.

De manière générale, la préparation de la solution mise en oeuvre notamment dans l'utilisation sus-visée, consiste à réaliser une solubilisation dans l'eau des solutés définis ci-dessus et ce, à une température de préférence comprise entre 20 ˚C et 55˚C.

Le composé aminohydroxylé et/ou alkylamine et/ou polyhydroxylé et le cas échéant la base forte, sont avantageusement tout d'abord mélangés dans l'eau, le ou les produits borés étant ensuite incorporés et malaxés.

Plus précisément, on préchauffe (par exemple à 40˚ C) au moins une partie de l'eau constituant la solution et on incorpore sous agitation au moins une partie des composés aminés et/ou polyhydroxylés jusqu'à l'obtention d'un mélange homogène.

On additionne ensuite dans le milieu sous agitation le ou les produits borés. Dans le cas où les produits borés sont formés par un mélange de borate et d'acide borique, le borate est avantageusement introduit le premier.

On malaxe et une réaction exothermique de neutralisation intervient alors.

On poursuit ensuite l'homogénéisation par malaxage du milieu pendant plusieurs minutes, par exemple, pendant une heure, en maintenant la température à des valeurs comprises entre 45 et 50 ˚C, e.g. pour une concentration en $B_2O_3$ d'environ 40 % poids. On obtient ainsi une solution limpide dans laquelle tous les solutés introduits sont solubilisés.

Pour terminer, on laisse refroidir la solution de préférence en maintenant l'agitation, pour éviter la formation de peau d'orange.

L'incorporation des autres ingrédients tels que le biocide et/ou l'anti-mousse (entre autres), peut être effectuée à tout moment, mais il est préférable qu'elle intervienne après refroidissement, naturellement toujours sous agitation.

**APPLICATION INDUSTRIELLE :**

La présente invention a également pour objet la colle amylacée adjuvantée à l'aide de la solution mise en oeuvre dans l'utilisation telle que décrite supra.

Enfin, l'invention vise également, entre autres, l'utilisation de la solution telle que définie supra :

  ∗ pour la décontamination de produits radioactifs,
  ∗ dans des produits lustrants et cirants
  ∗ ou dans des compositions biocides.

L'invention sera mieux comprise à l'aide des exemples non limitatifs qui suivent et qui illustrent la préparation de l'adjuvant liquide boré selon l'invention et son utilisation pour la fabrication de colles amylacées. Ces exemples montrent également les caractéristiques physico-chimiques de l'adjuvant boré limpide et de la colle amylacée, notamment en termes de spécifications recherchées dans l'application. Ces exemples font bien ressortir tous les avantages de l'invention ainsi que certaines de ses variantes de mise en oeuvre envisageables.

## EXEMPLES

## EXEMPLE I : PRÉPARATION DE SOLUTIONS AQUEUSES BORÉES

*1.1. Matières premières mises en oeuvre*

(i) **Les produits borés utilisés** sont ceux commercialisés par la Société BORAX et ceux provenant de Turquie.

- Borax : $B_4O_7Na_2$, $10H_2O$ de compositon théorique suivante :

  $\triangleright$ Anhydryde borique ($B_2O_3$)       36,52 %
  $\triangleright$ Oxyde de sodium $Na_2O$       16,25 %
  $\triangleright$ Eau de cristallisation       47,23 %

- Néobor ou borax pentahydraté = $B_4O_7Na_2$, $5H_2O$.

Composition théorique :

  $\triangleright$ $B_2O_3$       47,80 %
  $\triangleright$ Oxyde $Na_2O$       21,28 %
  $\triangleright$ Eau de cristallisation       30,92 %
  $\triangleright$ Acide borique = $B(OH)_3$ composition théorique $B_2O_3$       56,3 %
  $\triangleright$ Eau       43,7 %

- Anhydryde borique $B_2O_3$ ou Glacibor contenant 31,1 % en poids de bore.
- Pentaborate de sodium $Na_2O_5B_2O_3$, $10H_2O$

Composition théorique :

  $\triangleright$ $B_2O_3$       58,98 %
  $\triangleright$ $Na_2O$       10,50 %
  $\triangleright$ Eau de cristalllisation       30,52 %

(ii) **Les produits aminohydroxylés** mis en oeuvre sont la monoéthanolamine, la diéthanolamine et la triéthanolamine. **Le produit polyhydroxylé** utilisé est la glycérine, Le produit aminé employé est la diéthylènetriamine.

*1.2 Méthodologie*

<u>étape a)</u>

Selon une variante du procédé de la présente invention, on fait réagir sous agitation une base forte de type hydroxyde de sodium, avec de l'acide borique dans une eau préchauffée à 50 ˚C, pour former une solution aqueuse de pentaborate de soude.
La réaction peut être représentée par l'équation :

$$2\ NaOH + 10\ H_3BO_3 \rightarrow (B_{10}O_{16}Na_2, 10H_2O) + 6H_2O.$$

Cette étape peut être mise en oeuvre avec un rapport pondéral soude / acide borique allant généralement de 2,0 à 2,4. Il est préférable de mettre en oeuvre des quantités stoechiométriques pour les deux corps en réaction, de manière que la réaction conduise à la formation de la quantité maximale possible de pentaborate de soude. On peut remplacer totalement ou en partie l'hydroxyde de sodium par au moins un borate de soude pour former une solution aqueuse de pentaborate de soude.
On incorpore ensuite le composé aminé, ce qui donne lieu à une réaction exothermique de dilution.

<u>étape b)</u>

On incorpore ensuite l'acide borique, ce qui donne lieu à une réaction exothermique de neutralisation entre l'acide borique et l'amine.

Dans le cas où l'on a à faire à un mélange borate + acide borique, le borate est introduit en premier.

On malaxe jusqu'à complète homogénéisation et liquéfaction du mélange.

La température de la réaction peut aller en général jusqu'à 95 ˚C, mais elle est en pratique comprise entre 40 et 50˚ C dans le mode de réalisation préféré.

On laisse ensuite refroidir la solution limpide obtenue en maintenant l'agitation jusqu'au retour à la température ambiante comprise entre 20 et 30 ˚C.

<u>étape c)</u>

Il est possible d'ajouter à cette solution limpide un ou plusieurs additifs du type biocide et/ou anti-mousses et/ou tensioactif anionique et /ou non ionique..... et leurs mélanges.

Le tableau I ci-dessous donne les compositions des divers essais réalisés.

**TABLEAU I**

| Essais / Constituants de la solution aqueuse borée en % poids | $B_2O_3$ théorique | eau | acide borique | pentaborate do soude | Borax | $B_2O_3$ | NeoBor | Mono-éthanol-amine | Diétha-nolamine | diéthyléno triamine | lessive de soude 30 % pds | glycérine | pH |
|---|---|---|---|---|---|---|---|---|---|---|---|---|---|
| 1 | 34 | 25 | 35 | 25 | 0 | 0 | 0 | 15 | 0 | 0 | 0 | 0 | 7,7 |
| 2 | 35 | 16 | 62 | 0 | 0 | 0 | 0 | 22 | 0 | 0 | 0 | 0 | 8 |
| 3 | 34 | 19 | 60 | 0 | 0 | 0 | 0 | 16 | 0 | 0 | 5 | 0 | 7,4 |
| 4 | 35 | 18 | 56 | 0 | 10 | 0 | 0 | 16 | 0 | 0 | 0 | 0 | 7,3 |
| 5 | 35 | 20 | 57 | 0 | 0 | 0 | 7 | 16 | 0 | 0 | 0 | 0 | 7,25 |
| 6 | 43 | 28 | 0 | 0 | | 43 | 0 | 20 | 0 | 0 | 9 | 0 | 7,45 |
| 7 | 40,5 | 0 | 72 | 0 | | 0 | 0 | 20 | 0 | 0 | 8 | 0 | 7,50 |
| 8 | 35,5 | 18 | 57 | 0 | 9 | 0 | 0 | 16 | 0 | 0 | 0 | 0 | 7,17 |
| 9 | 34,4 | 17,6 | 55,3 | 0 | 9,2 | 34,4 | 0 | 15 | 0 | 0 | 2,9 | 0 | 7,20 |
| 10 | 35,8 | 20 | 57 | 0 | 0 | 0 | 0 | 16 | 0 | 0 | 0 | 0 | 7,25 |
| 11 | 34,7 | 4 | 62 | 0 | 0 | 0 | 0 | 0 | 34 | 0 | 0 | 0 | 7,25 |
| 12 | 34,9 | 25 | 62 | 0 | 0 | 0 | 0 | 0 | 0 | 13 | 0 | 0 | 7,06 |
| 13 | 35 | 41,5 | 0 | 0 | 0 | 35 | 0 | 15,5 | 0 | 0 | 8 | 0 | 7,60 |
| 14 | 41,3 | 11,5 | 42 | 30 | 0 | 0 | 0 | 16,5 | 0 | 0 | 0 | 0 | 7,18 |
| 15 * | 16,9 | 0 | 30 | 0 | 0 | 0 | 0 | 0 | 0 | 0 | 30 | 40 | 7,15 |
| 16 | 34,4 | 0 | 61,2 | 0 | 0 | 0 | 0 | 15,3 | 0 | 0 | 8,1 | 0 | 7,5 |

\* essai comparatif

EP 0 811 044 B2

## TABLEAU I

| Essais | B₂O₃ (poids théorique) | eau | acide borique | pentaborate de soude | Borax | B₂O₃ | NeoBor | Mono-éthanol-amine | Diétha-nolamine | diéthylène-triamine | lessive de soude 30 % pds | glycérine | pH |
|---|---|---|---|---|---|---|---|---|---|---|---|---|---|
| 1 | 34 | 25 | 35 | 25 | 0 | 0 | 0 | 15 | 0 | 0 | 0 | 0 | 7,7 |
| 2 | 35 | 16 | 62 | 0 | 0 | 0 | 0 | 22 | 0 | 0 | 0 | 0 | 8 |
| 3 | 34 | 19 | 60 | 0 | 0 | 0 | 0 | 16 | 0 | 0 | 5 | 0 | 7,4 |
| 4 | 35 | 18 | 56 | 0 | 10 | 0 | 0 | 16 | 0 | 0 | 0 | 0 | 7,3 |
| 5 | 35 | 20 | 57 | 0 | 0 | 0 | 7 | 16 | 0 | 0 | 0 | 0 | 7,25 |
| 6 | 43 | 28 | 0 | 0 |  | 43 | 0 | 20 | 0 | 0 | 9 | 0 | 7,45 |
| 7 | 40,5 | 0 | 72 | 0 | 9 | 0 | 0 | 20 | 0 | 0 | 8 | 0 | 7,50 |
| 8 | 35,5 | 18 | 57 | 0 | 9,2 | 0 | 0 | 16 | 0 | 0 | 0 | 0 | 7,17 |
| 9 | 34,4 | 17,6 | 55,3 | 0 | 0 | 34,4 | 0 | 15 | 0 | 0 | 2,9 | 0 | 7,20 |
| 10 | 35,8 | 20 | 57 | 0 | 0 | 0 | 0 | 16 | 0 | 0 | 0 | 0 | 7,25 |
| 11 | 34,7 | 4 | 62 | 0 | 0 | 0 | 0 | 0 | 34 | 0 | 0 | 0 | 7,25 |
| 12 | 34,9 | 25 | 62 | 0 | 0 | 0 | 0 | 0 | 0 | 13 | 0 | 0 | 7,06 |
| 13 | 35 | 41,5 | 0 | 0 | 0 | 35 | 0 | 15,5 | 0 | 0 | 8 | 0 | 7,60 |
| 14 | 41,3 | 11,5 | 42 | 30 | 0 | 0 | 0 | 16,5 | 0 | 0 | 0 | 0 | 7,18 |
| 15 | 16,9 | 0 | 30 | 0 | 0 | 0 | 0 | 0 | 0 | 0 | 30 | 40 | 7,15 |
| 16 | 34,4 | 0 | 61,2 | 0 | 0 | 0 | 0 | 15,3 | 0 | 0 | 8,1 | 0 | 7,5 |

Les solutions obtenues selon les essais 1 à 16 sont toutes parfaitement limpides.

On observe aucune cristallisation après plusieurs jours de stockage à des températures variant de - 5 C à + 60 °C. Ces solutions aqueuses borées sont donc remarquablement stables au stockage.

**EXEMPLE II : CARACTÉRISATION DES SOLUTIONS SELON LES ESSAIS 1 À 16 ET ADJUVANTATION DE COLLE AMYLACÉE À L'AIDE DESDITES SOLUTIONS**

*II.1 Protocole général de préparation de colle amylacée*

**Formulation Steinhall DF**

Primaire

```
Eau (1 > 35 ˚C)          600g
Antimousse Nopco 8034E          1,5 g
Amidon de blé réticulé (H = 13,2 %) (primaire)          50,8 g
Soude       6 g complétés                 à 30 g
```

→ Agitation 20 mn - vitesse : 2200 Tour par Minute (TPM) dans une turbine défloculeuse (Ø = 8 cm avec 2 x 8 dents).

Secondaire

```
Eau (t = 20 ˚C)          600 g
Amidon de blé réticulé (secondaire)          300 g
Produit boraxé          X g
Eau          Y g
```

**(X + Y = 24 g)**

→ Agitation 15 mn - vitesse : 2200 TPM
Viscosité Lory = 25 - 26 sec.

*II.2 Adjuvantation de colle amylacée avec l'essai 9*

Le pourcentage réfractomètre de l'essai 9 est égal à 51,6 %.

∗ Formulation SteinHall DF (idem II.1):

- X : 4 g
- Y : 20 g

*II.2.1 Après addition de l'essai on constate :*

∗ une augmentation viscosité immédiate,
∗ et une apparition du VORTEX, 60 secondes après addition de l'essai 9, ce qui n'est pas le cas pour des produits borés en poudre (gélification de la colle en surface amidon / borate).

a) Mesures de viscosité

a.1 Viscosité LORY $\eta_L$

| Temps d'agitation après addition essai 9 dans la colle (mn) | $\eta_L$ (s) |
|---|---|
| 10 | 79 |
| 15 | 48 |

a.2. Viscosité Brookfield $\eta_B$

| Régime d'agitation Rd/mn (RPM) | $\eta_B$ (m.Pa.s) |
|---|---|
| 5 | 2 100 |
| 10 | 1 575 |
| 20 | 1 225 |
| 50 | 890 |
| 100 | 685 |

*II.2.2 Addition eau en fin de préparation :*

successivement

| Quantités d'eau ajoutées successivement (g) | $\eta_L$ (s) |
|---|---|
| 40 | 40 |
| 40 | 30 |

*II.2.3 Caractéristiques colle*

pH : 11,8
Température de gélatinisation : 52 C.
Concentration commerciale : 21,6 % (amidon Iaire et IIaire)
Stabilité en étuve à 35 ˚C :

| | $\eta_L$ | $\eta_B$ à 20 RPM |
|---|---|---|
| Après 24 h | 30 sec. | 610 mPa.S |
| Après 48 h | 25 sec. | 480 mPa.S |

L'utilisation de l'essai 9 dans une formulation Steinhall DF, en remplacement du borax poudre, poids à poids, permet d'obtenir une préparation de caractéristiques comparables. A noter l'obtention pour une viscosité par écoulement du même ordre de grandeur (Lory et Steinhall), d'une viscosité Brookfield légèrement plus élevée par utilisation de l'essai 9.

*II1.3. Evaluation d'autres échantillons (1, 2, 13, 16) d'adjuvants liquides borés selon l'invention.*

On utilise le protocole de préparation de II.1
Le tableau II ci-dessous donne les conditions expérimentales et les résultats obtenus.

TABLEAU II(1)

| Référence échantillon | Borax poudre | essai 1 | essai 2 | essai 13 | essai 16 |
|---|---|---|---|---|---|
| Teneur $B_2O_3$ en % | 36,47 | 34,45 | 34,90 | 35,00 | 34,30 |
| pH | - | 7,70 | 8,00 | 7,60 | 7,50 |

(suite)

| Référence échantillon | Borax poudre | essai 1 | essai 2 | essai 13 | essai 16 |
|---|---|---|---|---|---|
| Stabilité | Poudre cristallisée | B | B | B | B |
| Viscosité à 20 RPM | - | 260 | 840 | 120 | 150 |
| % Réfracomètre | - | 55,60 | 61,80 | 53,20 | 54,10 |
| X g | 4 | 4 | 4 | 4 | 4 |
| Eau. après addition Borax (Yg) | 20 | 20 | 20 | 20 | 20 |
| Après addition Borax | | | | | |
| Lory après 10 mn | - | 59 | 64 | - | 82 |
| Lory après 15 mn | 37 | 44 | 45 | 43 | 49 |
| Température en ˚C | 33 | 33 | 34 | 34 | 33 |
| Viscosité Brookfield (5-10-20-50-100 RPM) | 1450 -1130<br>900<br>680 - 550 | 1820-1430<br>1170<br>890-700 | 1980-1580<br>1250<br>930-740 | 1960-1350<br>1090<br>810-670 | 2010-1650<br>1300<br>950-735 |
| Addition eau en fin de préparation (1) Lory en sec : eau ajoutée (g) → $\eta_L$ | 20 — 37<br>20 — 32<br>20 — 30<br>20 — 26 | 20 — 43<br>20 — 35<br>20 — 30<br>20 — 27 | 20 — 38<br>20 — 32<br>20 — 27<br>20 — - | 40 — 34<br>40 — 27<br>- — -<br>- — - | 40 — 42<br>- — -<br>40 — 31<br>- — - |
| Eau totale rajoutée en fin de préparation | 80 | 80 | 80 | 80 | 80 |
| Viscosité Brookfield (5-10-20-50-100 RPM) (1) | 890-740<br>620<br>480-390 | 1040-840<br>680<br>510-410 | 1090-860<br>700<br>540-440 | 920-780<br>650<br>510-470 | 1300-1000<br>800<br>600-470 |

TABLEAU II(2)

| Référence échantillon | Borax poudre | essai 1 | essai 2 | essai 13 | Essai 16 |
|---|---|---|---|---|---|
| Rapport $\dfrac{\eta_B \text{ à 5 RPM}}{100} / \dfrac{\eta_B \text{ à 10 RPM}}{100}$ | 2,28/1,90 | 2,54 /2,05 | 2,48/1,95 | 2,19/1,86 | 2,76/2,13 |
| Rapport $\dfrac{20\ RPM}{Lory}$ | 23,80 | 25,20 | 25,90 | 24,10 | 25,80 |
| Température de gélatinisation en ˚C | 51 | 53 | 53 | 51 | 52 |
| pH | 11,80 | 11,80 | 11,40 | 11,60 | 11,70 |

TABLEAU II(3)

| Référence échantillon | Borax poudre | essai 1 | essai 2 | essai 13 | essai 16 |
|---|---|---|---|---|---|
| Concentration commerciale (en %) en amidon total | 21,40 | 21,40 | 21,40 | 21,40 | 21,40 |

(suite)

| | | | | | |
|---|---|---|---|---|---|
| Stabilité en étuve à 35 ˚C | | | | | |
| Lory /RPM après 24 h (2) | 29 \| 520 | 28 \| 510 | 26 \| 480 | 44 \| | 28 \| 560 |
| 48 h | - | 22 \| 370 | - | - | - |
| 3 jours | - | 19 \| 310 | - | - | - |
| 4 jours | - | 17 \| 270 | - | 33 \| 570 | 20 \| 320 |
| 6 jours | - | - | - | - | - |
| Différence de viscosité entre (1) et (2) | 100 | 170 | 220 | 80 | 240 |

Commentaires des résultats :

Le fait de remplacer, dans des formulations Steinhall, le borax poudre par des produits boraxés sous forme liquide se traduit par une brusque augmentation de la viscosité dès l'addition du produit boraxé, ainsi que par une apparition du Vortex plus rapide.

**EXEMPLE III : PRÉPARATION COLLES AMYLACÉES AVEC UN ADJUVANT LIQUIDE BORE COMPRENANT UN BIOCIDE.**

*III.1. Préparation de la formule de colle*

. Eau 40 ˚C        400 g
. Amidon primaire        35 g
. Lessive de soude à 30,5 %        150 g
. Eau froide        205 g
. Amidon secondaire        200 g
. Adjuvant liquide de l'essai 2        2 g
. Biocide        Z % par rapport à l'ensemble des constituants de la colle

Le biocide est :

l'**ACTICIDE SPX** commercialisé par THOR        (B1)
L'**ACTICIDE RS** commercialisé par THOR        (B2)
le **FORMOL à 30 %**        (B3)
ou l'**ACTICIDE B 20** commercialisé par THOR        (B4).

*III. 2 Stabilité microbiologique avec ou sans inoculation*

L'inoculum utilisé comprend :

**SOUCHES BACTERIENNES**
*Pseudomonas aeruginosa*
*Pseudomonas stutzeri*
*Pseudomonas putida*
*Pseudomonas luteus*
*Enterobacter aerogenes*
*Alcaligenes faecalis*
*Aeromonas hydrophila*
*Cellulomonas flafigena*
*Arthrobacter nicotianae*
*Escherichia coli*
*Proteus vulgaris*
*Corynebacterium ammoniagenes*
**SOUCHES FONGIQUES**

*Aspergillus oryzae*
*Penicillium ochrochloron*
*Geotrichum candidum*
Stockage des échantillons à 35 C.

Les résultats sont donnés dans le tableau III ci-après

TABLEAU III

| | Présence germe | | | | |
|---|---|---|---|---|---|
| | sans inoculation | | | | inoculation |
| | 1 j | 2 j | 3 j | 5 j | 1 j |
| Témoin négatif | 0 | 0 | ++ | +++ | ++++ |
| $B_1$ Z = 0,01 % | 0 | 0 | 0 | 0 | 0 |
| $B_2$ Z = 0,02 % | 0 | 0 | 0 | 0 | 0 |
| $B_3$ Z = 0,01 % | 0 | 0 | 0 | 0 | 0 |
| $B_4$ Z = 0,01 % | 0 | 0 | 0 | 0 | 0 |

## Revendications

1. Utilisation d'une solution aqueusé borée, pour l'adjuvantation de colle amylacée, ladite solution comportant au moins un composé aminé, **caractérisée :**

   **en ce que** ladite solution comprend une quantité théorique de $B_2O_3$ comprise entre 25 et 55, de préférence entre 25 et 45 et plus préférentiellement encore entre 32 et 38 % en poids,
   et au moins un complexe solubilisé entre au moins un produit boré et le composé aminé, de préférence aminohydroxylé et/ou alkylaminé et/ou arylaminé et/ou un composé polyhydroxylé organique,
   **en ce que** son pH est compris entre 6 et 9, de préférence entre 7 et 8,
   et **en ce que** le composé aminé est choisi parmi les produits suivants : monoéthanolamine, diéthanolamine, triéthanolamine, hydrazine, diéthylènetriamine, éthylènediamine et leurs mélanges.

2. Utilisation selon les revendication 1, **caractérisée en ce que** la solution comporte au moins initialement une base forte minérale et/ou organique, de préférence hydroxylique, et plus préférentiellement encore choisie parmi les produits suivants : NaOH, KOH, LiOH et leurs mélanges.

3. Utilisation selon la revendication 1 ou 2, **caractérisée en ce que** le produit boré est sélectionné dans la liste suivante : anhydrides boriques, acides boriques, borates et leurs mélanges,
   les composés préférés étant les suivants : $B_4O_7$ $Na_2$, 10 $H_2O$ (Borax) ; $B_4O_7Na_2$, $5H_2O$ (Borax pentahydraté) ; $B_4O_7Na_2$ (Borax anhydre) ; $B(OH)_3$ (acide borique), $B_2O_3$ (anhydride borique) ; $B_{10}O_{18}Na_2$, $10H_2O$ (pentaborate de sodium) ; $BO_2$ Na, $4H_2O$ (métaborate de sodium) ; $B_{10}$ $O_{18}K_2$ , 8 $H_2O$ (pentaborate de potassium) ; $B_4O_7K_2$, 4 $H_2O$ (tétraborate de potassium) ; $B_4O_7(NH_4^+)_2$, 4 $H_2O$ (pentaborate d'ammonium) et leurs mélanges ;
   l'association d'acide borique avec de la soude pour l'initialisation de pentaborate de sodium étant particulièrement préférée.

4. Utilisation selon l'une quelconque des revendications 1 à 3, **caractérisé en ce que** la solution comporte au moins un additif choisi parmi :
   les anti-mousses, les biocides, les agents augmentant la résistance à l'humidité, les colorants, les tensioactifs ioniques ou non ioniques et leurs mélanges.

5. Utilisation selon l'une quelconque des revendications 1 à 4 **caractérisée en ce que** la solution a la composition suivante :

   - acide borique (à 56,3 % poids de $B_2O_3$ et 43,7 % poids d'eau)     0 - 80 % poids.
   - pentaborate de sodium     0 - 35 % poids.

- borate(s) alcalin(s)　　　0 - 20 % poids.
- $B_2O_3$　　　0 - 50 % poids.
- NaOH (30 % poids)　　　0 - 50 % poids.
- hydroxylamine, amine, hydrazine　　　0 - 40 % poids.
- Antimousse et/ou biocide et/ou tensioactif　　　0 - 20 % poids.

6. Utilisation selon l'une quelconque des revendications 1 à 5, caractérisée :

♦ en ce que la solution aqueuse borée comporte :

∗ une quantité théorique de $B_2O_3$, comprise entre 25 et 55, de préférence entre 25 et 45 et plus préférentiellement encore entre 32 et 38 % en poids
∗ au moins un complexe solubilisé entre au moins un produit boré et le composé aminé (de préférence aminohydroxylé et/ou alkylaminé et/ou arylaminé) et/ou un composé polyhydroxylé organique,
∗ et éventuellement au moins un biocide et/ou un anti-mousse et/ou un tensio-actif anionique ou non ionique,

♦ en ce qu'elle est obtenue à partir d'au moins un soluté boré initial formé par un mélange :

. d'au moins un borate
. d'acide borique et/ou de $B_2O_3$ ,
. et éventuellement d'au moins une base forte,

♦ et en ce que son pH est compris entre 6 et 9, de préférence entre 7 et 8.

7. Utilisation selon l'une quelconque des revendications 1 à 6 **caractérisée en ce qu'**elle comprend au moins un agent augmentant la mouillabilité de la solution, sélectionné de préférence parmi les composés suivants : méthanol ou 2-éthyl-hexylsulfate et leurs mélanges.

**Claims**

1. Use of a boron-containing aqueous solution for addition to starch paste, said solution containing at least one amino compound, **characterized:**
**in that** said solution comprises a theoretical amount of $B_2O_3$ of between 25 and 55, preferably of between 25 and 45% and even more preferably of between 32 and 38% by weight, and at least one solubilized complex between at least one boron-containing product and the amino compound, preferably aminohydroxylated and/or alkylamino and/or arylamino compound, and/or one organic polyhydroxylated compound,
**in that** its pH is between 6 and 9, preferably between 7 and 8,
and **in that** the amino compound is selected from the following products: monoethanolamine, diethanolamine, triethanolamine, hydrazine, diethylenetriamine, ethylenediamine and mixtures thereof.

2. Use according to Claim 1, **characterized in that** the solution at least initially contains a strong mineral and/or organic base, preferably a hydroxylic base, and even more preferably selected from the following products: NaOH, KOH, LiOH and mixtures thereof.

3. Use according to Claim 1 or 2, **characterized in that** the boron-containing product is selected from the following list: boric anhydrides, boric acids, borates and mixtures thereof;
the preferred compounds being as follows:

$Na_2B_4O_7$ ·$10H_2O$ (borax); $Na_2B_4O_7$·$5H_2O$ (borax pentahydrate); $Na_2B_4O_7$ (anhydrous borax); B $(OH)_3$ (boric acid), $B_2O_3$ (boron anhydride); $Na_2B_{10}O_{18}$·$10H_2O$ (sodium pentaborate); $NaBO_2$·$4H_2O$ (sodium metaborate); $K_2B_{10}O_{18}$·$8H_2O$ (potassium pentaborate); $K_2B_4O_7$·$4H_2O$ (potassium tetraborate); $(NH_4^+)_2B_4O_7$·$4H_2O$ (ammonium pentaborate), and mixtures thereof,
the association of boric acid with sodium hydroxide, for conversion to sodium pentaborate, being particularly preferred.

4. Use according to any one of Claims 1 to 3, **characterized in that** the solution contains at least one additive selected from:

antifoams, biocides, agents for increasing moisture resistance, colorants, ionic or nonionic surfactants and mixtures thereof. 35

5. Use according to any one of Claims 1 to 4, **characterized in that** the solution has the following composition:

- boric acid (containing 56.3% by weight of $B_2O_3$ and 43.7% by weight of water) 0 - 80% by weight
- sodium pentaborate 0 - 35% by weight
- alkali metal borate(s) 0 - 20% by weight
- $B_2O_3$ 0 - 50% by weight
- NaOH (30% by weight) 0 - 50% by weight
- hydroxylamine, amine, hydrazine 0 - 40% by weight
- antifoam and/or biocide and/or surfactant 0 - 20% by weight.

6. Use according to any one of Claims 1 to 5, **characterized:**

♦ **in that** the boron-containing aqueous solution comprises:

* a theoretical amount of $B_2O_3$ of between 25 and 55, preferably of between 25 and 45 and even more preferably of between 32 and 38% by weight,
* at least one solubilized complex between at least one boron-containing product and the amino compound (preferably aminohydroxylated and/or alkylamino and/or arylamino compound) and/or one organic polyhydroxylated compound,
* and optionally at least one biocide and/or one antifoam and/or one anionic or nonionic surfactant,

♦ and **in that** it is obtained from at least one initial boron-containing solute consisting of a mixture of:

· at least one borate,
· boric acid and/or $B_2O_3$,
· and optionally at least one strong base,

♦ and **in that** its pH is between 6 and 9, preferably between 7 and 8.

7. Use according to any one of Claims 1 to 6, **characterized in that** said solution comprises at least one agent for increasing the wettability of the solution, said agent preferably being selected from the following compounds: methanol or 2-ethylhexyl sulphate and mixtures thereof.

**Patentansprüche**

1. Verwendung einer wässrigen borhaltigen Lösung für die Zugabe zu einem stärkehaltigen Klebstoff, wobei die Lösung zumindest eine Aminverbindung aufweist, **dadurch gekennzeichnet,**

**dass** die Lösung eine theoretische Menge an $B_2O_3$ von 25 bis 55, vorzugsweise von 25 bis 45 und noch bevorzugter von 32 bis 38 Gew.-%, und zumindest einen solubilisierten Komplex aus zumindest einem borhaltigen Produkt und der Aminverbindung, vorzugsweise einer Hydroxylaminverbindung und/oder einer Alkylaminverbindung und/oder einer Arylaminverbindung und/oder einer polyhydroxylierten organischen Verbindung aufweist,

**dass** ihr pH-Wert bei 6 bis 9 und vorzugsweise bei 7 bis 8 liegt, und

**dass** die Aminverbindung ausgewählt ist aus den folgenden Produkten: Monoethanolamin, Diethanolamin, Triethanolamin, Hydrazin, Diethylentriamin, Ethylendiamin und Mischungen davon.

2. Verwendung nach Anspruch 1, **dadurch gekennzeichnet, dass** die Lösung zumindest anfänglich eine starke mineralische und/oder organische Base, vorzugsweise eine Hydroxylbase und noch bevorzugter eine aufweist, die ausgewählt ist aus den folgenden Produkten: NaOH, KOH, LiOH und Mischungen davon.

3. Verwendung nach Anspruch 1 oder 2, **dadurch gekennzeichnet, dass** das borhaltige Produkt ausgewählt ist aus der folgenden Liste: Borsäureanhydride, Borsäuren, Borate und Mischungen davon,

   wobei die bevorzugten Verbindungen die Folgenden sind: $B_4O_7Na_2$, $10H_2O$ (Borax), $B_4O_7Na_2$, $5H_2O$ (Borax Pentahydrat); $B_4O_7Na_2$ (wasserfreies Borax); $B(OH)_3$ (Borsäure), $B_2O_3$ (Borsäureanhydrid); $B_{10}O_{18}Na_2$, $10H_2O$ (Natriumpentaborat); $BO_2Na$, $4H_2O$ (Natriummetaborat); $B_{10}O_{18}K_2$, $8H_2O$ (Kaliumpentaborat); $B_4O_7K_2$ $4H_2O$ (Kaliumtetraborat); $B_4O_7(NH_4^+)_2$, $4H_2O$ (Ammoniumpentaborat) und Mischungen davon; wobei die Assoziierung von Borsäure mit Natriumhydroxid zur Bildung von Natriumpentaborat besonders bevorzugt ist.

4. Verwendung nach einem der Ansprüche 1 bis 3, **dadurch gekennzeichnet, dass** die Lösung zumindest einen Zusatzstoff aufweist, der ausgewählt ist aus:

   den Entschäumern, den Bioziden, den die Feuchtigkeitsbeständigkeit erhöhenden Mitteln, den Färbemitteln, den ionischen oder nicht ionischen grenzflächenaktiven Mitteln und deren Mischungen.

5. Verwendung nach einem der Ansprüche 1 bis 4, **dadurch gekennzeichnet, dass** die Lösung die folgende Zusammensetzung aufweist:

   - Borsäure (mit 56,3 Gew.-% $B_2O_3$ und 43,7 Gew.-% Wasser) 0 bis 80 Gew.-%
   - Natriumpentaborat 0 bis 35 Gew.-%
   - Alkalische(s) Borat(e) 0 bis 20 Gew.-%
   - $B_2O_3$ 0 bis 50 Gew.-%
   - NaOH (30 Gew.-%) 0 bis 50 Gew.-%
   - Hydroxylamin, Amin, Hydrazin 0 bis 40 Gew.-%
   - Entschäumer und/oder Biozid und/oder grenzflächenaktives Mittel 0 bis 20 Gew.-%

6. Verwendung nach einem der Ansprüche 1 bis 5, **dadurch gekennzeichnet,**

   • **dass** die wässrige borhaltige Lösung Folgendes aufweist:

   \* eine theoretische Menge an $B_2O_3$ von 25 bis 55, vorzugsweise von 25 bis 45 und noch bevorzugter von 32 bis 38 Gew.-%,
   \* zumindest einen solubilisierten Komplex aus zumindest einem borhaltigen Produkt und der Aminverbindung (vorzugsweise einer Hydroxylaminverbindung und/oder einer Alkylaminverbindung und/oder einer Arylaminverbindung) und/oder einer polyhydroxylierten organischen Verbindung,
   \* und gegebenenfalls zumindest ein Biozid und/oder einen Entschäumer und oder ein anionisches oder nicht ionisches grenzflächenaktives Mittel,

   • **dass** sie ausgehend von zumindest einem borhaltigen gelösten Ausgangsstoff erhalten wird, der gebildet wird aus einer Mischung aus:

   - zumindest einem Borat
   - Borsäure und/oder $B_2O_3$
   - und gegebenenfalls zumindest einer starken Base,

   • und **dass** ihr pH bei 6 bis 9, vorzugsweise bei 7 bis 8 liegt.

7. Verwendung nach einem der Ansprüche 1 bis 6, **dadurch gekennzeichnet, dass** mindestens ein Mittel zur Verbesserung der Netzfähigkeit der Lösung vorhanden ist, das vorzugsweise ausgewählt ist aus den folgenden Verbindungen: Methanol oder 2-Ethyl-hexylsulfat und Mischungen davon.